⑲ 🎧 **Europäisches Patentamt**

**European Patent Office**

**Office européen des brevets**

(11) Veröffentlichungsnummer : **0 073 944 B1**

## (12) EUROPÄISCHE PATENTSCHRIFT

(45) Veröffentlichungstag der Patentschrift :
**30.10.85**

(21) Anmeldenummer : **82107268.3**

(22) Anmeldetag : **11.08.82**

(51) Int. Cl.⁴ : **A 45 D 20/30, G 05 D 22/02**

(54) Trockenhaube.

(30) Priorität : **05.09.81 DE 3135216**

(43) Veröffentlichungstag der Anmeldung :
**16.03.83 Patentblatt 83/11**

(45) Bekanntmachung des Hinweises auf die Patenterteilung : **30.10.85 Patentblatt 85/44**

(84) Benannte Vertragsstaaten :
**AT FR GB IT**

(56) Entgegenhaltungen :
**DE-A- 835 791
DE-A- 2 810 766
DE-A- 2 816 421
DE-A- 2 827 514
DE-A- 2 843 092
DE-B- 1 079 801
DE-B- 1 276 302
US-A- 4 112 591**

(73) Patentinhaber : **Braun Aktiengesellschaft
Rüsselsheimer Strasse 22
D-6000 Frankfurt/Main (DE)**

(72) Erfinder : **Barowski, Karlheinz
Stettiner Strasse 58
D-6235 Okriftel (DE)**
Erfinder : **Kelterborn, Heinz
Am tiefen Born 8
D-6367 Karben 3 (DE)**
Erfinder : **Stiegler, Alex
Julius-Brecht Strasse 6
D-6231 Schwalbach/Ts. (DE)**

(74) Vertreter : **Einsele, Rolf
Braun Aktiengesellschaft Postfach 1120 Frankfurter
Strasse 145
D-6242 Kronberg Taunus (DE)**

**Beschreibung**

Die Erfindung bezieht sich auf eine Trockenhaube mit einer elektrischen Heizvorrichtung, einem der Luftzufuhr auf das zu trocknende Haar dienenden, motorisch angetriebenen Gebläse und mit einem Feuchtefühler, der die Heizleistung der Heizvorrichtung in Abhängigkeit von der Luftfeuchtigkeit in seiner Umgebung derart regelt, daß mit abnehmender Luftfeuchtigkeit die Heizleistung der Heizvorrichtung ebenfalls vermindert wird.

Aus der DE-A-28 27 514 ist ein Haartrocknungsgerät bekannt, bei dem mittels eines als Feuchtigkeitsmesser dienenden Steuerkondensators die Heizleistung und die Drehzahl des den trocknenden Luftstrom erzeugenden Motors oder, gemäß einer weiteren Ausführungsform, bei gleichbleibender Motordrehzahl auch nur die Heizleistung alleine dauernd derart geregelt wird, daß mit abnehmender Luftfeuchtigkeit auch die Heizleistung verringert wird. Dabei dient der Steuerkondensator dadurch als Feuchtemesser, daß seine Kapazität von der Feuchtigkeit der als Dielektrikum wirkenden Luft zwischen seinen Elektroden abhängt.

Die maßgebende Steuergröße für diese Regelung ist die Luftfeuchtigkeit im Bereich oberhalb der zu trocknenden Haare, während gemäß der vorliegenden Anmeldung die Luftfeuchtigkeit im Abluftstrom der Trockenhaube die Steuergröße bildet. Dies ist deshalb von Bedeutung, da die Feuchtigkeit der Luft im Bereich der Leitfläche 7 (siehe Fig. 1 der o. g. DE-A) — da im Zuluftstrom gelegen — praktisch der Feuchtigkeit der Außenluft entspricht, was dazu führt, daß die so gewonnene Steuergröße für eine feuchtigkeitsabhängige Regelung der Heizleistung untauglich ist.

Eine in einer älteren, aber nicht vorveröffentlichten deutschen Patentanmeldung gemäß DE-A-31 12 384 beschriebenen Trockenhaube mit feuchtigkeitsabhängiger Heizungsregelung stellt demgegenüber zwar eine gewisse Verbesserung dar ; jedoch ist auch die in dieser Schrift dargestellte Sensor-Anordnung stark von der Form und Größe des Kopfes bzw. der Frisur sowie davon abhängig, wieweit der Kopf bzw. die Frisur in die Trockenhaube hineinragt ; d. h., die Randbedingungen der Feuchte-Registrierung können sich von Fall zu Fall und sogar während eines Trocknungsvorganges wesentlich ändern. Außerdem ist der Feuchtesensor gemäß dieser Patentanmeldung so angeordnet, daß er einem Umluftstrom im Haubeninnenraum ausgesetzt ist und infolgedessen den tatsächlichen Fortgang der Haartrocknung nur verhältnismäßig träge und mit zeitlicher Verzögerung erfaßt.

Der Erfindung liegt die Aufgabe zugrunde, eine Trockenhaube der eingangs genannten Art zu entwickeln, bei der das Haar möglichst rasch und ohne Gefahr einer Schädigung durch zu hohe Temperaturen und ohne willkürlich erforderlich werdende Heizleistungsverstellung getrocknet werden kann.

Diese Aufgabe wird erfindungsgemäß dadurch gelöst, daß der Feuchtefühler dem Abluftstrom der Trockenhaube ausgesetzt wird.

Der Hauptvorteil der Erfindung liegt darin, daß man bei Benutzung einer solchen Trockenhaube nicht mehr nach Gefühl die Heizleistung herunterschalten muß, vielmehr eine automatische Anpassung der Heizleistung an den Trocknungsverlauf eintritt. Dadurch wird einerseits immer mit maximal zulässigen Temperaturen gearbeitet, so daß die Trocknungszeit kurz ist, andererseits ist eine Haarschädigung ausgeschlossen, weil mit zunehmender Haartrocknung die Temperatur automatisch abgesenkt wird.

Besonders einfach ist die Erfindung zu verwirklichen, wenn der Feuchtefühler in der Haube angeordnet ist. Dies gilt vor allem für feste Hauben, wie sie in Friseurgeschäften gebräuchlich sind.

Bei Luftkissenhauben kann man den Feuchtefühler in einem gemeinsamen Gehäuse mit dem Gebläse und der Heizung sowie der Heizleistungsregelung unterbringen, wenn, gemäß einer anderen Ausgestaltung der Erfindung, aus der Trockenhaube ein Absaugkanal heraus zu dem Luftdurchsatzgerät geführt ist.

Besonders exakt läßt sich die Heizleistung entsprechend dem Trockungungsverlauf regeln, wenn der Absaugkanal an einer Seite der Haube hochgeführt ist und in etwa oben auf der Mitte der Haube endet.

Diese exakte Anpassung an den Trocknungsverlauf läßt sich noch steigern, wenn die Trockenhaube entsprechend Anspruch 5 gestaltet ist.

Besonders zuverlässig arbeitet der Feuchtefühler, wenn er, wie im Anspruch 6 angegeben, ein Kondensator ist, dessen Dielektrikum von der Trockenluft gebildet wird. Ein solcher Feuchtefühler ist obendrein sehr billig herstellbar, so daß er sich auch für ein Massenprodukt, wie es Trockenhauben darstellen, eignet.

Der Einfluß der Umgebungsluftfeuchte kann bei der Heizleistungsregelung zusätzlich berücksichtigt werden, wenn die elektrische Schaltung, wie in Anspruch 7 angegeben, aufgebaut ist.

Die Heizleistungsregelung wird zweckmäßigerweise so wie in Anspruch 8 präzisiert ausgebildet.

Die Erfindung läßt zahlreiche Ausführungsmöglichkeiten zu. Mehrere davon sind schematisch in der Zeichnung dargestellt und werden nachfolgend beschrieben.

Es zeigen :

Figur 1 eine Ansicht von vorn auf eine erfindungsgemäß gestaltete Luftkissenhaube ;

Figur 2 eine zweite Ausführungsform einer Luftkissenhaube von vorn gesehen ;

Figur 3 die Luftkissenhaube gemäß Figur 2 von der Seite gesehen ;

Figur 4 eine dritte Ausführungsform einer Luftkissenhaube von vorn gesehen ;

Figur 5 die Luftkissenhaube gemäß Figur 4 von der Seite gesehen ;

Figur 6 eine als Schwebehaube ausgebildete Trockenhaube von vorn gesehen ;

Figur 7 das auf der Schwebehaube gemäß Figur 6 aufgesetzte Luftdurchsatzgerät im Schnitt dargestellt ;

Figur 8 das Grundprinzip der Heizleistungsregelung gemäß der Erfindung ;

Figur 9 die genaue Schaltung der Heizleistungregelung.

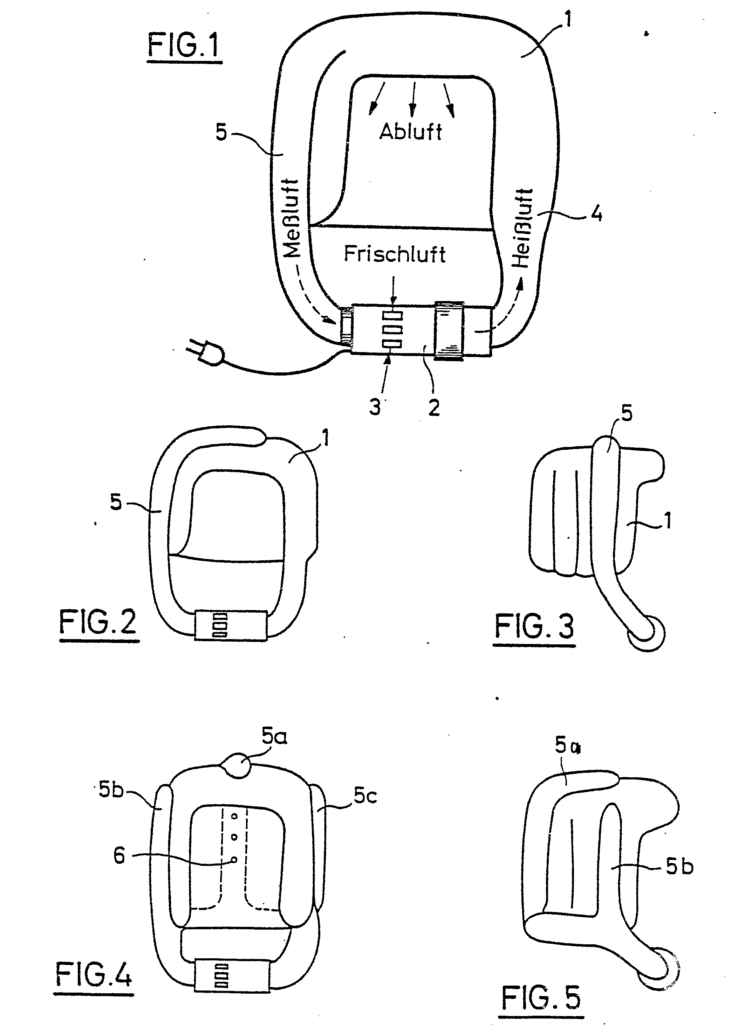

Die Figur 1 zeigt eine Luftkissenhaube 1 aus flexiblem Material. Ein Luftdurchsatzgerät 2, welches, wie allgemein üblich, jedoch nicht dargestellt, ein Gebläse und eine elektrische Heizung enthält, saugt über Ansaugöffnungen 3 Frischluft an und fördert diese nach Erwärmung mittels der Heizung über einen Heißluftschlauch 4 in die Luftkissenhaube 1. Die Abluft gelangt überwiegend über nicht dargestellte Löcher in der Luftkissenhaube 1 nach außen. Ein Teil der Abluft wird jedoch über einen ebenfalls als Schlauch ausgebildeten Absaugkanal 5 aus der Luftkissenhaube 1 abgesaugt und dem Luftdurchsatzgerät 2 zugeführt. In dem Luftdurchsatzgerät 2 sind ein später noch erläuterter Feuchtefühler und eine Heizleistungsregelung angeordnet, durch die in Abhängigkeit von der Feuchte in der über den Absaugkanal zugeführten Meßluft die Heizleistung automatisch veränderbar ist.

Die Figuren 2 und 3 zeigen, daß der Absaugkanal 5 an einer Seite der Luftkissenhaube 1 hochgeführt ist und in etwa bis zur Mitte oben auf der. Haube reicht.

Bei der Ausführungsform gemäß den Figuren 4 und 5 sind insgesamt drei Absaugkanäle 5a, 5b, 5c vorgesehen. Ein hinterer Absaugkanal 5a reicht dabei bis zur Kopfmitte oben auf der Luftkissenhaube 1, während die beiden anderen Absaugkanäle 5b, 5c an beiden Seiten bis zum Schläfenbereich hochgeführt sind. Die Absaugkanäle 5a, 5b, 5c saugen, genau wie der Absaugkanal 5 in den Figuren 2 und 3, nicht etwa nur an ihrem Ende Meßluft aus der Luftkissenhaube 1, sondern über ihre gesamte Länge im Bereich der Luftkissenhaube 1 über Löcher 6, welche die Absaugkanäle 5a, 5b, 5c mit der Luftkissenhaube 1 verbinden.

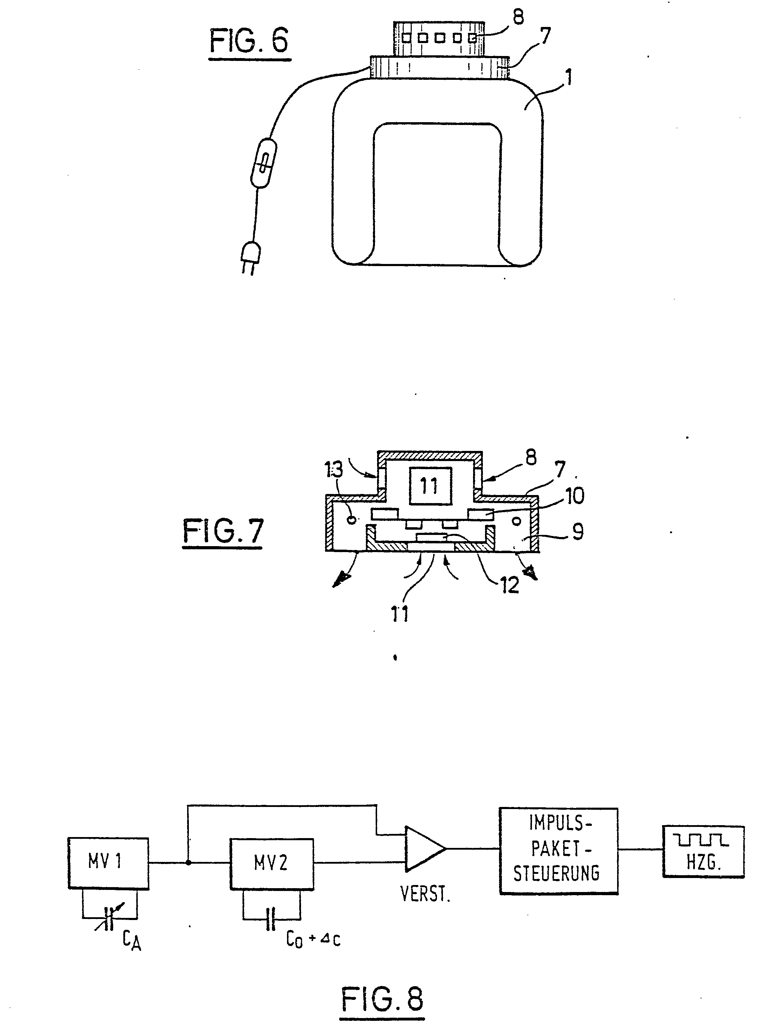

Die Figuren 6 und 7 zeigen, daß die Erfindung auch ohne weiteres bei einer sogenannten Schwebehaube zu verwirklichen ist, bei der auf der Luftkissenhaube 1 ein flaches, tellerartiges Luftdurchsatzgerät 7 sitzt. Dieses saugt wie üblich über Ansaugöffnungen 8 Frischluft an und drückt sie über Heißluftauslässe 9 in die Luftkissenhaube 1. Koaxial zu dem Gebläse 10 des Luftdurchsatzgerätes 7 ist ein luftkissenhaubenseitiger Meßlufteinlaß 11 vorgesehen, durch den Luft aus der Luftkissenhaube 1 in das Luftdurchsatzgerät 7 gesaugt wird. Unmittelbar hinter dem Meßlufteinlaß 11 ist ein Feuchtefühler 12 vorgesehen, durch welchen in Abhängigkeit von der Feuchte in der abgesaugten Meßluft die Heizleistung der in dem Luftdurchsatzgerät 7 vorhandenen elektrischen Heizung 13 geregelt wird.

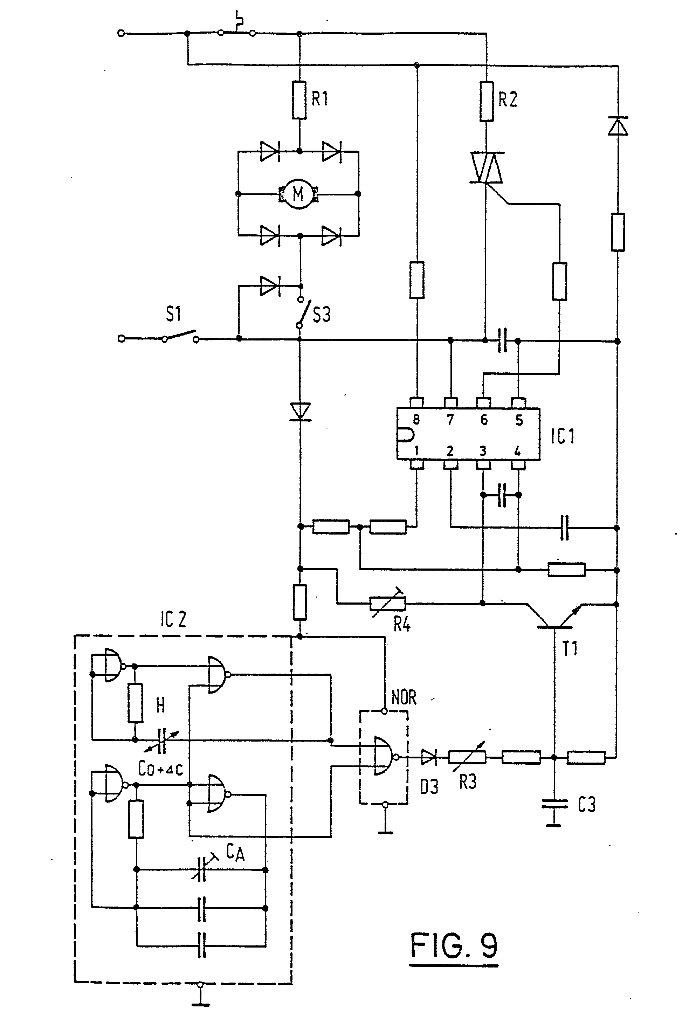

Das Grundprinzip der Heizleistungsregelung für alle dargestellten Ausführungsformen einer Luftkissenhaube ergibt sich aus Figur 8. Im einzelnen dargestellt ist die Schaltung in der Figur 9.

Die Schaltung besteht aus einer in bekannter Weise aufgebauten Impulspaketsteuerung durch IC1. Bei fallendem positiven Potential an Anschluß 3 des IC1 wird das Verhältnis Impulspause zu Impulslänge immer größer, das heißt, die Leistung am Widerstand R2 fällt. Der Widerstand R2 entspricht beispielsweise der Heizwendel der elektrischen Heizung 13 in Figur 7.

Die Steuerung dieses Potentials erfolgt über den Transistor T1, dessen Betriebspunkt über R3 durch den Benutzer zur individuellen Wahl des Trocknungsverlaufs verändert werden kann.

Die Erfassung der Restfeuchte in der Trockenluft erfolgt über einen Sensor H, den beispielsweise der Feuchtefühler 12 in Figur 7 dargestellt und welcher im Prinzip einen Kondensator hat, dessen Kapazität sich ändert, weil sein Dielektrikum von der Trockenluft gebildet wird und die Dielektrizitätskonstante von der Luftfeuchte abhängt.

Die Weiterverarbeitung dieser Information erfolgt in einer aus zwei Multivibratoren gebildeten Schaltung. Dabei erzeugt der erste Multivibrator MV1 Rechteckimpulse mit einer dem Wert von CA entsprechenden Dauer. CA ist ein Trimmkondensator, der auf den Wert Co (Restkapazität des Feuchtesensors bei sehr trockener Luft) eingestellt werden kann. Durch Ersatz dieses Kondensators durch einen zweiten Feuchtefühler, der mit Raumluft beaufschlagt ist, kann diese in den Trocknungsverlauf einbezogen werden.

Der MV1 synchronisiert einen zweiten Multivibrator MV2, bei dem die Dauer der Impulse CO + C (der Kapazitäts-Änderung durch Luftfeuchte) ist. An den Ausgängen dieser Schaltung tritt ein Impuls entsprechend $C = C_a - C_o$ auf.

Dieser Impuls wird dem NOR-Gatter zugeführt, gleichgerichtet und mit C3 aufintegriert und bildet dann das Protential zur Steuerung von T1.

R1 ist in bekannter Weise Vorwiderstand des Motors M und ergibt gleichzeitig die Rest-Heizleistung, auf die die Gesamtleistung des Gerätes abfällt, wenn R2 über die Impulspaketsteuerung nicht mehr versorgt wird.

**Patentansprüche**

1. Trockenhaube mit einer elektrischen Heizvorrichtung, einem der Luftzufuhr auf das zu trocknende Haar dienenden, motorisch angetriebenen Gebläse und mit einem Feuchtefühler, der die Heizleistung der Heizvorrichtung in Abhängigkeit von der ihn umgebenden Luftfeuchtigkeit derart regelt, daß mit abnehmender Luftfeuchtigkeit die Heizleistung der Heizvorrichtung ebenfalls vermindert wird, dadurch gekennzeichnet, daß der Feuchtefühler (12, H) einem aus dem Haubeninnenraum abgesaugten Abluftstrom der Trockenhaube ausgesetzt wird.

2. Trockenhaube nach Anspruch 1, dadurch gekennzeichnet, daß dem der Feuchtigkeit der Abluft ausgesetzten Feuchtefühler (12, H) nur ein als Meßluft dienender Teil des gesamten Abluftstroms der Trockenhaube zugeführt wird.

3. Trockenhaube nach Anspruch 2, dadurch gekennzeichnet, daß diese als sogenannte Luftkissenhaube (1) ausgeführt ist, bei der das die Heizvorrichtung (R1, R2), das Gebläse, den Feuchtefühler (12, H) und die Regeleinrichtung enthaltende Luftdurchsatzgerät (2) von dem über das Haar zu stülpenden Haubenteil getrennt ist und daß von diesem Haubenteil dem Luftdurchsatzgerät (2) mittels eines Absaugkanals (5) die Meßluft zugeführt wird.

4. Trockenhaube nach Anspruch 3 oder 4, dadurch gekennzeichnet, daß der als Meßluft dienende Teil des Abluftstroms aus insgesamt drei Absaugkanälen (5a, 5b, 5c) stammt, von denen zwei (5b, 5c) seitlich der Trockenhaube (1) bis zum Schläfenbereich hochgeführt sind und einer (5a) an der Rückseite der Trockenhaube (1) bis zur Kopfmitte auf der Haubenoberseite verläuft.

5. Trockenhaube nach Anspruch 1, dadurch gekennzeichnet, daß die Heizvorrichtung (R1, R2) ein erstes Heizelement (R1) und ein zweites Heizelement (R2) aufweist, wobei die von dem ersten Heizelement (R1) abgegebene Heizleistung nicht geregelt wird und von dem zweiten, geregelten Heizelement (R2) oberhalb eines bestimmbaren oberen bzw. unterhalb eines ebenfalls bestimmbaren unteren Grenzwertes der im Abluftstrom vorhandenen Feuchte eine maximale bzw. überhaupt keine Heizleistung mehr abgegeben wird.

6. Trockenhaube nach einem der vorhergehenden Ansprüche, dadurch gekennzeichnet, daß neben dem im Abluftstrom des zu trocknenden Haars liegenden ersten Feuchtefühler (12, H) noch ein zweiter Feuchtefühler ($C_A$) vorhanden ist, der von der Raumluft umgeben ist und damit den Sollwert für die Restfeuchtigkeit des aus dem Haar austretenden Abluftstroms liefert.

7. Trockenhaube nach Anspruch 6, dadurch gekennzeichnet, daß die beiden Feuchtefühler (12 oder H und $C_A$) aus Kondensatoren bestehen, die jeweils ohne Dielektrikum die gleiche Kapazität besitzen, wobei das Dielektrikum des ersten Feuchtefühlers (12, H) vom Abluftstrom und das des zweiten Feuchtefühlers ($C_A$) von der die Trockenhaube umgebenden Raumluft gebildet wird.

8. Trockenhaube nach Anspruch 7, dadurch gekennzeichnet, daß die Schaltung zur Regelung der Heizleistung einen ersten Multivibrator (M1) aufweist, der einen zweiten Multivibrator (M2) synchronisiert und daß die beiden als Feuchtefühler (12 oder H und $C_A$) dienenden Kondensatoren jeweils Bestandteil des die Dauer des jeweiligen Ausgangssignals bestimmenden RC-Glieds der beiden Multivibratoren sind und daß die Ausgänge der beiden Multivibratoren (M1, M2) einem NOR-Gatter zugeführt werden, dessen Ausgangssignal mit einem Kondensator (C3) aufintegriert und anschließend über einen Verstärker (T1) einer Impulspaketsteuerung (IC1) der Heizvorrichtung zugeführt wird.

## Claims

1. Drying hood with an electrical heating device, a motor-driven blower which supplies the air to the hair to be dried and with a moisture sensor, which regulates the calorific power of the heating device as a function of the atmospheric humidity surrounding it in such a way that with decreasing atmospheric humidity the calorific power of the heating device is also reduced, characterized in that the moisture sensor (12, H) is exposed to the outlet air sucked from the inner area of the drying hood.

2. Drying hood according to claim 1, characterized in that the moisture sensor (12, H) exposed to the moisture of the outlet air is only supplied with part of the total outlet air of the drying hood which acts as measurement air.

3. Drying hood according to claim 2, characterized in that it is constructed as a so-called air cushion hood (1), in which the air flow device (2) containing the heating device (R1, R2), the blower, the moisture sensor (12, H) and the regulating device is separated from the hood part to be placed over the hair and that the measurement air is supplied to the air flow device (2) from the said hood part by means of a suction tube (5).

4. Drying hood according to claim 3 or 4, characterized in that that part of the outlet air flow serving as the measurement air emanates from a total of three suction tubes, (5a, 5b, 5c), whereof two (5b, 5c) are raised up laterally of the drying hood (1) to the temple region and one (5a) passes along the top rear surface of the drying hood (1) to the centre of the head.

5. Drying hood according to claim 1, characterized in that the heating device (R1, R2) has a first heating element (R1) and a second heating element (R2), the calorific power supplied by the first heating element (R1) not being regulated, whilst the second, regulated heating element (R2) supplies a maximum or no calorific power above a predeterminable upper or below an also predeterminable lower threshold value of the moisture present in the outlet air flow.

6. Drying hood according to one of the preceding claims, characterized in that apart from the first moisture sensor (12, H) located in the outlet air flow of the hair to be dried a second moisture sensor ($C_A$) is provided, which is surrounded by the ambient air and consequently supplies the desired value for the residual moisture of the outlet air flow from the hair.

7. Drying hood according to claim 6, characterized in that the two moisture sensors (12 or H and $C_A$) comprise capacitors, which in each case without dielectric have the same capacitance, the dielectric of the first moisture sensor (12, H) being formed by the outlet air flow and that of the second moisture sensor ($C_A$) is formed by the ambient air surrounding the drying hood.

8. Drying hood according to claim 7, characterized in that the circuit for regulating the calorific power has a first multivibrator (M1), which synchronizes a second multivibrator (M2) and that the two capacitors acting as moisture sensors (12 or H and $C_A$) are in each case part of the RC-network of the two multivibrators which determines the duration of the particular output signal and that the outputs of the two multivibrators (M1, M2) are supplied to a NOR-gate, whose output signal is integrated with a capacitor (C3) and is then supplied across an amplifier (T1) to a pulse group control (IC1) of the heating device.

**Revendications**

1. Bonnet de séchage comportant un dispositif électrique de chauffage, un ventilateur motorisé servant à amener l'air sur les cheveux à sécher et un détecteur d'humidité qui règle la puissance de chauffage du dispositif de chauffage en fonction de l'humidité de l'air qui l'entoure de façon que si l'humidité de l'air diminue, la puissance de chauffage du dispositif de chauffage diminue également, caractérisé en ce que le détecteur d'humidité (12, H) est exposé à un courant d'air de sortie du bonnet de séchage aspiré à partir de l'espace interne du bonnet.

2. Bonnet de séchage selon la revendication 1, caractérisé en ce que l'on n'amène au détecteur d'humidité (12, H), exposé à l'humidité de l'air de sortie, qu'une partie, servant d'air de mesure, du courant total d'air de sortie du bonnet de séchage.

3. Bonnet de séchage selon la revendication 2, caractérisé en ce qu'il est exécuté sous forme de ce que l'on appelle un bonnet à coussin d'air (1) dans lequel l'appareil de passage d'air (2), qui contient le dispositif de chauffage (R1, R2), le ventilateur, le détecteur d'humidité (12, H) et le dispositif de régulation, est séparé de la partie du bonnet qui vient s'enfoncer sur les cheveux ; et en ce que l'air servant à la mesure est amené depuis cette partie du bonnet jusqu'à l'appareil de passage de l'air (2) au moyen d'une gaine aspirante (5).

4. Bonnet de séchage selon la revendication 3 et la revendication 4, caractérisé en ce que la partie du courant d'air de sortie qui sert d'air de mesure provient au total de trois gaines aspirantes (5a, 5b, 5c) dont deux (5b, 5c) montent sur le côté du bonnet de séchage (1) jusque dans la région de la tempe et dont une (5a) court sur la face arrière du bonnet de séchage (1) jusqu'au milieu de la tête sur la face supérieure du bonnet.

5. Bonnet de séchage selon la revendication 1, caractérisé en ce que le dispositif de chauffage (R1, R2) présente un premier élément chauffant (R1) et un deuxième élément chauffant (R2), étant précisé que la puissance de chauffage fournie par le premier élément chauffant (R1) n'est pas régulée et étant précisé que le deuxième élément chauffant (R2), régulé, donne une puissance maximale de chauffage au-dessus d'une valeur limite supérieure, que l'on peut définir, de l'humidité régnant dans le courant d'air de sortie ; et ne donne absolument plus de puissance de chauffage en dessous d'une valeur limite inférieure, que l'on peut également définir, de cette même humidité.

6. Bonnet de séchage selon l'une des revendications précédentes, caractérisé en ce qu'en plus du premier détecteur d'humidité (12, H) situé dans le courant d'air de sortie des cheveux à sécher existe aussi un deuxième détecteur d'humidité ($C_A$) environné par l'air ambiant et donnant donc la valeur nominale de l'humidité résiduelle du courant d'air sortant de la chevelure.

7. Bonnet de séchage selon la revendication 6, caractérisé en ce que les deux détecteurs d'humidité (12 ou H et $C_A$) sont constitués de condensateurs qui, sans diélectrique, présentent respectivement la même capacité, le diélectrique du premier détecteur d'humidité (12, H) étant formé du courant d'air de sortie et le diélectrique du deuxième détecteur d'humidité ($C_A$) étant formé de l'air ambiant qui entoure le bonnet de séchage.

8. Bonnet de séchage selon la revendication 7, caractérisé en ce que le circuit de régulation de la puissance de chauffage présente un premier multivibrateur (M1) qui synchronise un deuxième multivibrateur (M2) et en ce que les deux condensateurs servant de détecteurs d'humidité (12 ou H et $C_A$) sont respectivement des constituants du circuit RC, qui détermine la durée du signal de sortie respectif, des deux multivibrateurs ; et en ce que les signaux des deux multivibrateurs (M1, M2) sont amenés à une porte NON OU dont le signal de sortie est intégré au moyen d'un condensateur (C3) et ensuite amené, par l'intermédiaire d'un amplificateur (T1), à une commande par paquets d'impulsions (IC1) du dispositif de chauffage.

FIG.1

Abluft

Meßluft

Frischluft

Heißluft

1
5
4
3
2

FIG.2

1
5

FIG.3

5
1

FIG.4

5a
5b
5c
6

FIG.5

5a
5b

FIG. 6

8

7

1

FIG. 7

13

8

7

11

10

9

11

12

FIG. 8

| MV 1 | | MV 2 | | VERST. | IMPULS-PAKET-STEUERUNG | HZG. |

$C_A$

$C_0 + \Delta c$

0 073 944

FIG. 9